# EUROPEAN PATENT SPECIFICATION

(11) **EP 3 764 052 B1**
(45) Date of publication and mention of the grant of the patent: **14.06.2023**
(21) Application number: 19425051.0
(22) Date of filing: 12.07.2019
(51) Int. Cl.: F41A 23/18, B60R 7/14

(54) **SUPPORT AND RETENTION FRAME FOR CARRYING TWO DIFFERENT MACHINE GUNS**
TRAG- UND HALTERAHMEN ZUM TRAGEN VON ZWEI VERSCHIEDENEN MASCHINENGEWEHREN
CADRE DE RÉTENTION ET DE SUPPORT POUR TRANSPORTER DEUX MITRAILLEUSES DIFFÉRENTES

(43) Date of publication of application: 13.01.2021
(73) Proprietor: FCA Italy S.p.A., 10135 Torino (IT)
(72) Inventor: Pizzo, Luca Angelo, 10135 Torino (IT); Passantino, Luca, 10135 Torino (IT)
(74) Representative: Lovino, Paolo

(56) References cited:
- US-A1- 2012 160 791
- US-A1- 2012 246 900
- US-B1- 10 024 620

## Description

The present invention relates to a support and retention frame for carrying two different machine guns, as an alternative to one another, for example on a vehicle.

It is known to provide support and retention frames on vehicles, arranged in a fixed position below the seats and having a shape and dimensions such as to house a weapon, in particular a machine gun. US 2012/246900 A1 and US 2012/160791 A1 are known support and retention frames for carrying different machine guns.

In a solution known from Italian patent application IT102017000107548, the support and retention frame is provided with a steel base, obtained by cutting and bending, and with two opposite ends which are configured so as hold the machine gun, while connecting devices are provided at the central base to be fixed to the car seat. One of the two ends has a housing to receive the mouth of the gun and a retaining member with a lock. Said lock can be operated to safely hold the machine gun in the aforementioned housing. The other of the two ends has a support element configured so as to couple the buttstock of the machine gun.

In particular, this support element has two distinct seats which can be selected as an alternative to one another, by way of rotation of the aforementioned support element, so as to be able to receive the buttstock of two different machine guns, as an alternative to one another.

The need is felt to improve the known solutions described above, in particular to be able to support different machine guns without having to move support elements in the frame.

The object of the present invention is therefore to provide a support and retention frame for carrying two different machine guns, which allows to fulfill the above-mentioned need in a simple and inexpensive manner and preferably, is relatively simple, light and not bulky.

According to the present invention, a support and retention frame is provided for carrying two different machine guns, as defined in claim 1.

For a better understanding of the present invention, a preferred embodiment is now described, purely by way of nonlimiting example, with reference to the attached drawings, wherein:
- Figures 1 and 2 are perspective views of a preferred embodiment of the support and retention frame for carrying two different machine guns, according to the dictates of the present invention, particularly adapted for a passenger-side seat of a vehicle;
- Figures 3, 4 and 5 are a plan view, a front view and a rear view, respectively, of the support frame of Figures 1 and 2;
- Figure 6 illustrates in perspective and on an enlarged scale a detail of the support frame of Figures 1 and 2;
- Figures 7 and 8 illustrate in perspective views a further detail of the support frame of Figures 1 and 2; and
- Figures 9 and 10 are similar to Figures 4 and 6, respectively, and show an alternative of the support frame of Figures 1 and 2, particularly adapted for a driver-side seat of a vehicle.

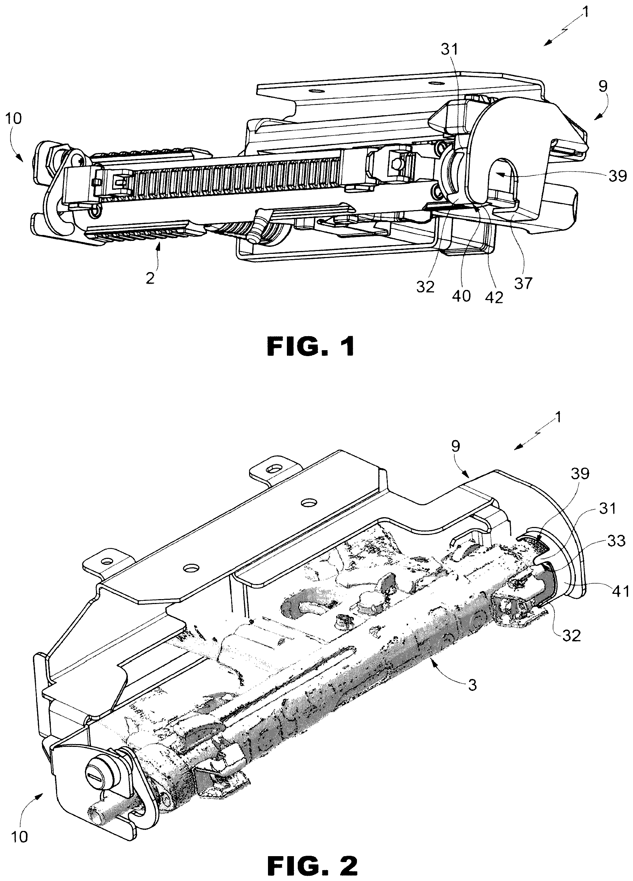

In Figures 1 and 2, the reference number 1 denotes a support and retention frame for holding two different machine guns, denoted by the reference numbers 2 and 3, respectively, as an alternative to one another.

With reference to Figures from 3 to 5, the frame 1 is mounted, in use, on a vehicle (not illustrated) below a seat. In particular, the frame 1 has characteristics such as to be coupled to a passenger-side seat. The frame 1 comprises an intermediate portion 5, which has one or more fixing elements 6, defined in particular by fins or perforated brackets for fixing the frame 1, and extends in a direction 7 transverse in relation to a longitudinal travelling direction 8 of the vehicle. In particular, the fixing elements 6 are arranged at an upper end of the portion 5, for being fixed to the aforesaid seat.

The frame 1 comprises, furthermore, two end portions 9 and 10, which are arranged on opposite sides of the portion 5 along the direction 7 and have characteristics such as to support and keep blocked the machine guns 2 and 3, as will be described in the following.

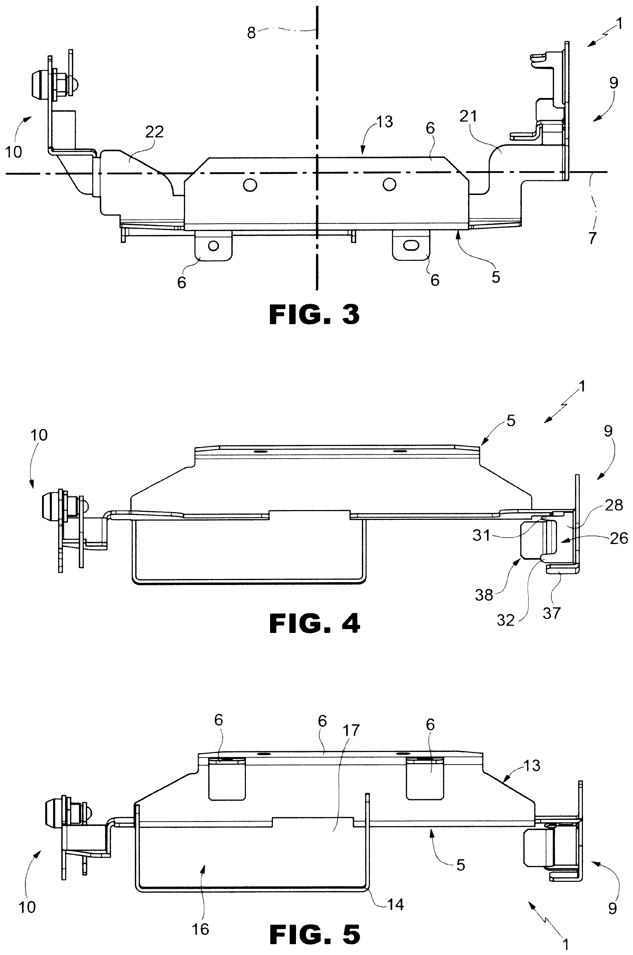

Preferably, as shown in Figures 4 and 5, the portion 5 comprises a structure 13, preferably made of sheet metal, and a C-shaped or arc-shaped element, which is denoted with the reference number 14, is fixed to the structure 13 and defines, together with the latter, a compartment 16 which passes through, along the direction 8, and is engaged, in use, by a magazine of the machine guns 2,3.

In particular, the element 14 protrudes in a cantilever manner downwards from a plate 17 of the structure 13, which is parallel to the direction 7 and transverse to the direction 8. In particular, one of the fixing elements 6 is defined by a fin which protrudes forwards from an upper edge of the plate 17, while the other fixing elements 6 are defined by two brackets which protrude backwards from a rear surface of the plate 17.

More in particular, the structure 13 comprises, furthermore, two fins 21 and 22 (Figure 4) which protrude forward from a lower edge of the plate 17, are coplanar and spaced apart one from the other and terminate at the portions 9 and 10, respectively.

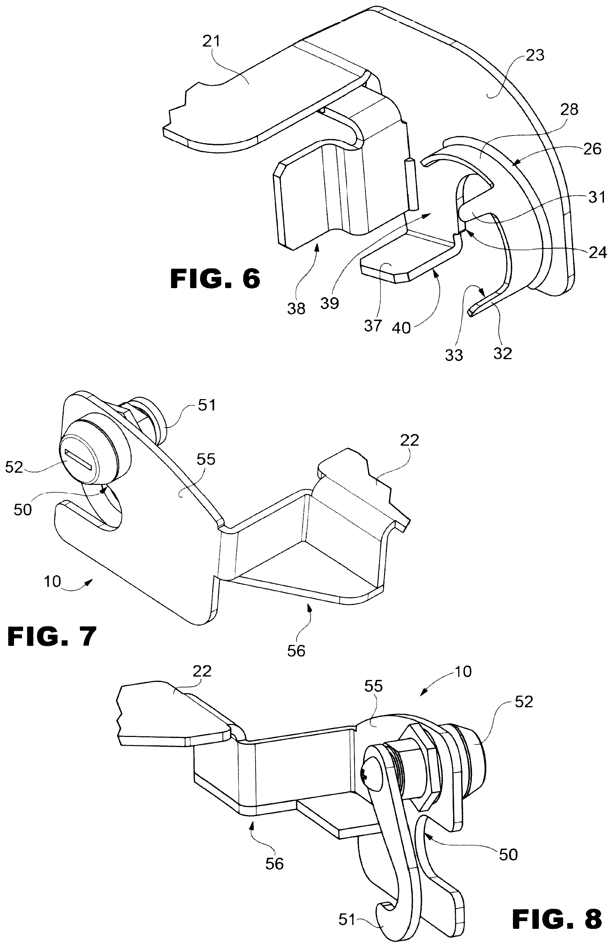

With reference to Figure 6, the portion 9 comprises a plate 23 which protrudes forwards and transversely in relation to the fin 21, is therefore transverse also in relation to the direction 7, has a recess 24 along its own lower edge and carries a housing element 26.

The housing element 26 comprises a wall 28, which protrudes from the plate 23 towards the portion 10, is preferably welded to the plate 23 and has an arched profile with its concavity facing backwards (i.e. towards the recess 24 and/or the fin 21). The housing element 26 comprises, furthermore, an upper tooth 31 and a lower tooth 32, which protrude towards the portion 10, starting from the wall 28 extending therefrom and in a substantially parallel manner to one another, and are spaced along the arched profile of the wall 28 so as to define vertically, one with the other, a slot 33 (in a tangential direction in relation to the axis of the seat 39).

The portion 9 comprises, furthermore, two shoulder walls 37 and 38, which are fixed in relation to the plate 23 and to the housing element 26 and define, together with the latter, a seat 39 adapted to house the buttstocks of the machine guns 2 and 3. In particular, the wall 38 and the housing element face so as to form a sort of jaw which stops the buttstock longitudinally inside the seat 39.

The teeth 31 and 32 have the function of avoiding rotations of the two buttstocks inside the seat 39. At the same time, the walls 37 and 38 are transversal to one another, preferably they are flat and orthogonal to one another, and they stop the buttstocks in the vertical direction and, respectively, along the longitudinal direction 8.

Preferably, the housing element 26 has a flared shape along the axis of the seat 39, from the wall 28 towards the teeth 31 and 32, in particular it has a substantially truncated-cone shape, so as to perform an invitation function for the insertion of the buttstock inside the seat 39 towards the plate 23.

The wall 37 is substantially horizontal so as to define a stop or a retention shoulder in the vertical direction, as mentioned above. The wall 37 is arranged longitudinally between the tooth 32 and the wall 38.

In particular, the rear edge of the tooth 32 and the front edge of the wall 37 are longitudinally facing each other, substantially at the same height, so as to delimit a slot 40 (in tangential direction in relation to the axis of the seat 39) .

The wall 38 is transverse to the direction 8, so as to define a stop or a retention shoulder in the longitudinal direction, as mentioned above. It is arranged in an intermediate position between the wall 37 and the fin 21, longitudinally. In the frame 1 of Figures 1-8, it is higher than the wall 37.

For example, the walls 37 and/or 38 are welded to the plate 23.

When the seat 39 is engaged by the buttstock of the machine gun 3 (Figure 2), the slot 33 between the teeth 31 and 32 is engaged by a sight 41 provided on said buttstock so as to prevent rotating thereof around the axis of the seat 39. Similarly, when the seat 39 is engaged by the buttstock of the machine gun 2 (Figure 1), the slot 40 is engaged by a side projection 42 provided on said buttstock. In particular, the projection 42 is in abutment against the rear edge of the tooth 32.

In particular, as shown in Figure 6, the wall 38 comprises two parallel and offset portions 44 and 45, and an intermediate portion 46 which connects the portions 44 and 45 to one another, so that the portion 44 protrudes from the plate 23 and is closer to the housing element 26 and to the wall 37 with respect to the portion 45 (which therefore appears to be further back than the portion 44). This shape of the wall 38 contributes to receiving the buttstock of the machine gun 3 which has a different shape from that of the machine gun 2.

For example, the portion 44 defines a support or shoulder for the buttstock of the machine gun 2. In the frame 1 of Figures 1-8, the rear edge of the tooth 31 longitudinally faces towards an upper area of the portion 44 (in a tangential direction in relation to the axis of the seat 39) so as to house a side part of the buttstock.

At the same time, the portion 45 defines a support or shoulder for the buttstock of the machine gun 3.

With reference to Figures 7 and 8, the portion 10 has a passage 50, coaxial with the seat 39 and is adapted to be engaged by a mouth or a barrel of the machine guns 2 and 3. The portion 10 comprises a retaining member 51 which is movable between a closed position, in which it holds said mouth or barrel in the passage 50, and an open position, in which it leaves the mouth or barrel free to exit the passage 50. The portion 10 further comprises a lock 52 operable by means of a key (not illustrated) for locking/unlocking the retaining member 51 in relation to the closed position.

Preferably, the passage 50 is defined by a notch or a slot formed in a plate 55, which is transversal to the direction 7 and to the axis of the passage 50 and forms part of a structure 56 which protrudes from the fin 22, while the retaining member 51 is defined by a lever or hook hinged to the plate 55 around a rotation axis parallel to the axis of the passage 50. In the closed position, said lever or hook is arranged at a front entry opening of the passage 50.

The portion 10, in use, is arranged towards the door of the vehicle, while the portion 9 is arranged towards the center-line plane of the vehicle itself, for safety reasons.

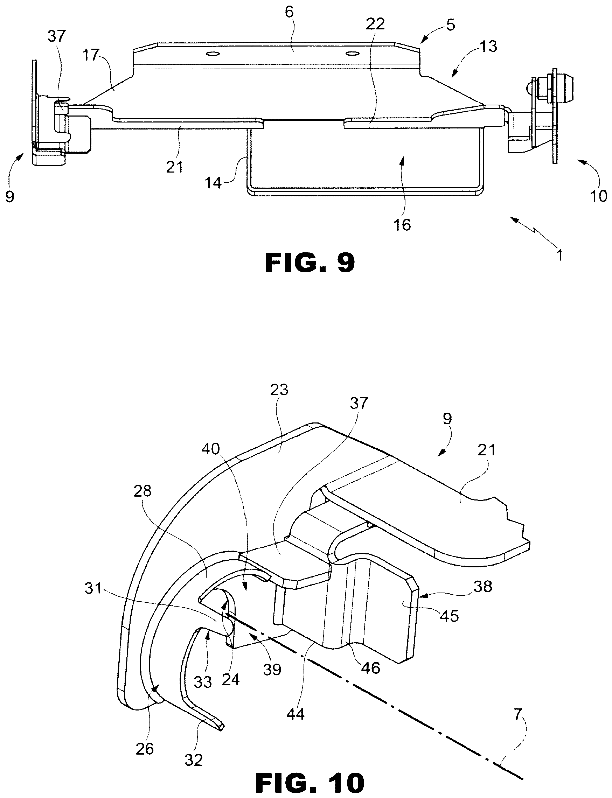

In the alternative shown in Figures 9 and 10, the frame 1 is configured so as to be installed on a driver-side seat of the vehicle. Essentially, it is a symmetrical configuration in relation to a vertical center-line plane of the frame 1, with slight additional modifications. In particular, in this alternative of the frame 1, the wall 37 is arranged higher than the wall 38 (Figure 10), i.e. in a position longitudinally facing the rear edge of the tooth 31. In this way, the slot 40 for the side projection 42 is provided between the rear edge of the tooth 31 and the front edge of the wall 37 (always in a tangential direction in relation to the axis of the seat 39). In particular, the projection 42 is in abutment against the rear edge of the tooth 31. At the same time, the rear edge of the tooth 32 is longitudinally facing a lower area of the portion 44 (in a tangential direction in relation to the axis of the seat 39), so that it can house a side part of the buttstock.

Moreover, as shown in Figure 9, in this alternative the frame 1 has a slightly different angle, in relation to the arrangement provided in Figure 4.

From the foregoing it is clear that the frame 1 can be used for holding two different machine guns, without having to move any element in order to configure the frame 1.

In particular, the shape of the portion 9 is such as to be able to house indifferently, in the seat 39, either one or the other buttstock of the machine guns 2,3, due to the conformation of the housing element 26 and to the presence of the walls 37 and 38.

In particular, the teeth 31 and 32 allow the rotation of the two types of buttstock to be locked inside the seat 39.

At the same time, the portion 10 is relatively simple to use for rapidly inserting the barrel or mouth of the machine guns 2,3 into the passage 50. In particular, the insertion of the barrel or mouth takes place after having axially inserted the buttstock into the seat 39, by means of a movement that is directed longitudinally. Obviously, the movement to disengage the machine gun 2,3 from the frame 1 is opposite to the coupling movement, and is equally simple and fast.

Finally, it is clear that modifications and variations can be made to the frame 1 described and illustrated herein without thereby departing from the scope of the present invention, as defined in the attached claims.

In particular, the specific shape or configuration of the portion 10 and/or of the portion 5 could be different from that indicated by way of example. Moreover, the wall 28 could be absent or it could have a different shape from what is illustrated; and/or the walls 37 and/or 38 could be shaped differently from what is shown in the attached figures, but always arranged so as to define at least one slot in the longitudinal direction, in relation to the teeth 31,32.

## Claims

1. A support and retention frame (1) for carrying two different machine guns (2,3), as an alternative to one another, the frame comprising:
- an intermediate portion (5) comprising fixing means (6) for coupling the frame (1) in a fixed position;
- a first and a second end portion (9,10) arranged on opposite sides of said intermediate portion (5) along a transverse axis (7);
said first end portion (9) having a seat (39) configured so as to house a buttstock of said machine guns;
said second end portion (10) comprising a locking member (51) with a lock for holding a barrel or mouth of said machine guns;
**characterized in that** said seat (39) is delimited by at least:
- an upper tooth (31) and a lower tooth (32), protruding towards said second end portion (10) and vertically defining, between each other, a first slot (33) adapted for being engaged by a sight provided on the buttstock of one of said machine guns;
- at least a first wall (37) facing one of said upper and lower teeth (31,32) so as to horizontally define a second slot (40) adapted to be engaged by a side projection (42) provided on the buttstock of the other of said machine guns.

2. The frame according to claim 1, **characterized in that** said first end portion (9) comprises a housing element (26) having a wall (28) with an arched profile, from which said upper and lower teeth protrude.

3. The frame according to claim 2, **characterized in that** said upper and lower teeth (31,32) define an extension of said wall (28) with an arched profile.

4. The frame according to claim 3, **characterized in that** said housing element (26) has a flared shape, from said wall (28) with an arched profile towards said upper and lower teeth (31,32).

5. The frame according to any one of the preceding claims, **characterized in that** said seat (39) is further delimited by a second wall (38) which extends transversely to said first wall (37) .

6. The frame according to claim 5, **characterized in that** said first wall (37) extends horizontally and said second wall (38) extends vertically.

7. The frame according to claim 5 or 6, **characterized in that** one of said first and second walls (37,38) comprises a first and a second portion (44,45), which are parallel to and offset from one another, and a connecting portion (46) which joins said first and second portions (44,45) to one another.

8. The frame according to any one of the preceding claims, **characterized in that** said second end portion (10) comprises a passage (50) which is adapted to be engaged by said barrel or mouth and is defined by a notch or slot in a plate (55) transversal to the said transverse direction (7).

9. The frame according to claim 8, **characterized in that** said retaining member (51) is defined by a lever or hook which is rotatable about a rotation axis parallel to said transverse direction (7) so as to be arranged at a front entry opening of said passage (50).

10. The frame according to any one of the preceding claims, **characterized in that** said intermediate portion (5) comprises a structure (13) and a C-shaped or arc-shaped element (14), which is fixed to said structure (13) and defines, together with said structure (13), a through compartment (16) adapted to be engaged, in use, by a magazine of said machine guns (2,3) .

11. The frame according to any one of the preceding claims, **characterized in that** said first wall (37) extends horizontally so as to vertically stop said buttstock inside said seat (39).

## Patentansprüche

1. Stütz- und Halterahmen (1) zum Tragen von zwei unterschiedlichen Maschinengewehren (2, 3) als Alternative zueinander, wobei der Rahmen Folgendes umfasst:
- einen Zwischenabschnitt (5), der Befestigungsmittel (6) zum Koppeln des Rahmens (1) in einer befestigten Position umfasst;
- einen ersten und einen zweiten Endabschnitt (9, 10), die auf gegenüberliegenden Seiten des Zwischenabschnitts (5) entlang einer Querachse (7) angeordnet sind;
wobei der erste Endabschnitt (9) einen Sitz (39) aufweist, der konfiguriert ist, um einen Hinterschaft der Maschinengewehre aufzunehmen;
wobei der zweite Endabschnitt (10) ein Verriegelungselement (51) mit einer Verriegelung zum Halten eines Laufs oder einer Mündung der Maschinengewehre umfasst;
**dadurch gekennzeichnet, dass** der Sitz (39) durch mindestens Folgendes begrenzt ist:
- einen oberen Zahn (31) und einen unteren Zahn (32), die zu dem zweiten Endabschnitt (10) hin vorstehen und vertikal zwischen sich einen ersten Schlitz (33) definieren, der angepasst ist, um durch ein Visier eingegriffen zu werden, das auf dem Hinterschaft eines der Maschinengewehre bereitgestellt ist;
- mindestens eine erste Wand (37), die zu einem des oberen und des unteren Zahns (31, 32) hin gerichtet ist, um horizontal einen zweiten Schlitz (40) zu definieren, der angepasst ist, um von einem Seitenvorsprung (42) eingegriffen zu werden, der auf dem Hinterschaft des anderen der Maschinengewehre bereitgestellt ist.

2. Rahmen nach Anspruch 1, **dadurch gekennzeichnet, dass** der erste Endabschnitt (9) ein Aufnahmeelement (26) umfasst, das eine Wand (28) mit einem gebogenen Profil aufweist, von welcher der obere und der untere Zahn vorstehen.

3. Rahmen nach Anspruch 2, **dadurch gekennzeichnet, dass** der obere und der untere Zahn (31, 32) eine Erweiterung der Wand (28) mit einem gebogenen Profil definieren.

4. Rahmen nach Anspruch 3, **dadurch gekennzeichnet, dass** das Aufnahmeelement (26) eine aufgeweitete Form von der Wand (28) mit einem gebogenen Profil zu dem oberen und dem unteren Zahn (31, 32) hin besitzt.

5. Rahmen nach einem der vorherigen Ansprüche, **dadurch gekennzeichnet, dass** der Sitz (39) ferner durch eine zweite Wand (38) begrenzt ist, welche sich quer zu der ersten Wand (37) erstreckt.

6. Rahmen nach Anspruch 5, **dadurch gekennzeichnet, dass** sich die erste Wand (37) horizontal erstreckt und sich die zweite Wand (38) vertikal erstreckt.

7. Rahmen nach Anspruch 5 oder 6, **dadurch gekennzeichnet, dass** eine der ersten und der zweiten Wand (37, 38) einen ersten und einen zweiten Abschnitt (44, 45), welche parallel und versetzt zueinander sind, und einen Verbindungsabschnitt (46), welcher den ersten und den zweiten Abschnitt (44, 45) miteinander verbindet, umfasst.

8. Rahmen nach einem der vorherigen Ansprüche, **dadurch gekennzeichnet, dass** der zweite Endabschnitt (10) einen Durchgang (50) umfasst, welcher angepasst ist, um von dem Lauf oder der Mündung eingegriffen zu werden, und durch eine Kerbe oder einen Schlitz in einer Platte (55) quer zu der Querrichtung (7) definiert ist.

9. Rahmen nach Anspruch 8, **dadurch gekennzeichnet, dass** das Halteelement (51) durch einen Hebel oder einen Haken definiert ist, welcher um eine Rotationsachse parallel zu der Querrichtung (7) gedreht werden kann, um an einer vorderen Eintrittsöffnung des Durchgangs (50) angeordnet zu werden.

10. Rahmen nach einem der vorherigen Ansprüche, **dadurch gekennzeichnet, dass** der Zwischenabschnitt (5) eine Struktur (13) und ein C-förmiges oder bogenförmiges Element (14), welches an der Struktur (13) befestigt ist und zusammen mit der Struktur (13) ein Durchgangsabteil (16) definiert, das angepasst ist, um im Gebrauch von einem Magazin der Maschinengewehre (2, 3) eingegriffen zu werden, umfasst.

11. Rahmen nach einem der vorherigen Ansprüche, **dadurch gekennzeichnet, dass** sich die erste Wand (37) horizontal erstreckt, um den Hinterschaft innerhalb des Sitzes (39) vertikal zu stoppen.

## Revendications

1. Cadre de support et de retenue (1) pour transporter deux mitrailleuses (2, 3) différentes, à titre de variante l'une par rapport à l'autre, le cadre comprenant :
une partie intermédiaire (5) comprend des moyens de fixation (6) pour coupler le cadre (1) dans une position fixe ;
une première et une seconde partie d'extrémité (9, 10) disposées sur les côtés opposés de ladite partie intermédiaire (5) le long d'un axe transversal (7) ;
ladite première partie d'extrémité (9) ayant un siège (39) configuré afin de loger une crosse desdites mitrailleuses ;
ladite seconde partie d'extrémité (10) comprenant un élément de blocage (51) avec un verrou pour maintenir un canon ou bouche desdites mitrailleuses ;
**caractérisé en ce que** ledit siège (39) est délimité par au moins :
une dent supérieure (31) et une dent inférieure (32), faisant saillie vers ladite seconde partie d'extrémité (10) et définissant verticalement, entre elles, une première fente (33) adaptée pour être mise en prise par un viseur prévu sur la crosse de l'une desdites mitrailleuses ;
au moins une première paroi (37) faisant face à l'une desdites dents supérieure et inférieure (31, 32) afin de définir horizontalement une seconde fente (40) adaptée pour être mise en prise par une saillie latérale (42) prévue sur la crosse de l'autre desdites mitrailleuses.

2. Cadre selon la revendication 1, **caractérisé en ce que** ladite première partie d'extrémité (9) comprend un élément de logement (26) ayant une paroi (28) avec un profil arqué, à partir de laquelle lesdites dents supérieure et inférieure font saillie.

3. Cadre selon la revendication 2, **caractérisé en ce que** lesdites dents supérieure et inférieure (31, 32) définissent une extension de ladite paroi (28) avec un profil arqué.

4. Cadre selon la revendication 3, **caractérisé en ce que** ledit élément de logement (26) a une forme évasée, à partir de ladite paroi (28) avec un profil arqué vers lesdites dents supérieure et inférieure (31, 32).

5. Cadre selon l'une quelconque des revendications précédentes, **caractérisé en ce que** ledit siège (39) est en outre délimité par une seconde paroi (38) qui s'étend de manière transversale par rapport à ladite première paroi (37).

6. Cadre selon la revendication 5, **caractérisé en ce que** ladite première paroi (37) s'étend horizontalement et ladite seconde paroi (38) s'étend verticalement.

7. Cadre selon la revendication 5 ou 6, **caractérisé en ce que** l'une desdites première et seconde parois (37, 38) comprend une première et une seconde partie (44, 45) qui sont parallèles et décalées l'une de l'autre, et une partie de raccordement (46) qui assemble lesdites première et seconde parties (44, 45) l'une à l'autre.

8. Cadre selon l'une quelconque des revendications précédentes, **caractérisé en ce que** ladite seconde partie d'extrémité (10) comprend un passage (50) qui est adapté pour être mis en prise par ledit canon ou bouche et est défini par une encoche ou fente dans une plaque (55) transversale par rapport à ladite direction transversale (7) .

9. Cadre selon la revendication 8, **caractérisé en ce que** ledit élément de retenue (51) est défini par un levier ou crochet qui peut tourner autour d'un axe de rotation parallèle à ladite direction transversale (7) afin d'être disposé à une ouverture frontale d'entrée dudit passage (50).

10. Cadre selon l'une quelconque des revendications précédentes, **caractérisé en ce que** ladite partie intermédiaire (5) comprend une structure (13) et un élément en forme de C ou en forme d'arc (14), qui est fixé sur ladite structure (13) et définit, conjointement avec ladite structure (13), un compartiment passant (16) adapté pour être mis en prise, à l'usage, par un chargeur desdites mitrailleuses (2, 3).

11. Cadre selon l'une quelconque des revendications précédentes, **caractérisé en ce que** ladite première paroi (37) s'étend horizontalement afin d'arrêter verticalement ladite crosse à l'intérieur dudit siège (39) .
